# EUROPEAN PATENT APPLICATION

(11) **EP 1 757 375 A1**
(43) Date of publication of application: **28.02.2007**
(21) Application number: 05741546.5
(22) Date of filing: 17.05.2005
(51) Int. Cl.: B09B 3/00, G11B 33/00, B30B 9/00

(54) **RECORDING MEDIUM DESTRUCTION DEVICE**

(30) Priority: 20.05.2004 JP 2004150790; 16.07.2004 JP 2004210499
(71) Applicant: Orient Instrument Computer Co., Ltd, Osaka-shi, Osaka 536-0014 (JP)
(72) Inventor: ITO, Tomoaki, ORIENT INSTRUMENT COMPUTER CO., Ltd., Osaka-shi Osaka 540-6035 (JP)
(74) Representative: Paul, Dieter-Alfred
(86) International application number: PCT/JP2005/008992
(87) International publication number: WO 2005/113170

(57) **Abstract**

The invention aims to provide a recording medium destruction device adapted to readily destroying a recording medium that is small and irregularly mounted such as an IC mounted on a board.
A recording medium destruction device 1 consists mainly of a device mounting part 2, a destruction part 3, and an elevating unit 5. The destruction part 3 includes a number of needles 10 arranged vertically and horizontally in a planar manner and is divided into six sections. In order to destroy recording media such as ICs mounted on a circuit board 25 using the recording medium destruction device 1, the circuit board 25 incorporating ICs (recording media) 26 to be destroyed is to be put on the device mounting part 2, whereupon the destruction part 3 is moved down to perforate a number of throughholes in the circuit board 25.

## Description

### BACKGROUND OF THE INVENTION

### TECHNICAL FIELD

The present invention relates to a recording medium destruction device adapted to destroy a recording medium so as to render the medium unreadable. The present invention is suitable for destroying a recording medium such as an IC mounted on a circuit board and recording information therein.

### BACKGROUND ART

Computer-related technology makes advances, and computers become widely used in companies and homes in these days. Further, although computer-related technology is in the process of improving dramatically even now, the technology continues to improve with surprising speed from day to day. Therefore, computers purchased by companies or individuals have an obsolescence of a short space of time, so that they seek new computers.
That causes many occasions to dispose of the existing computers made redundant.
Meanwhile, computers have therein a number of memories (recoding media), so that it is necessary to pay close attention so as to avoid leakage of secret information from the memories within the computers when the unneeded computers are disposed of, and thus, recorded information should be erased or made unreadable.
A means such as overwriting dummy data a plurality of times is thought as a way to erase recorded information, but it requires a considerable amount of time to make completely impossible to read information that one wants to erase. A method to physically destroy a recording medium to make information unreadable is more practical than a method to erase information, and the art employing such a disposal method is disclosed in a patent document 1.
Patent document 1: JP 2004-071057A
The art disclosed in the patent document 1 is a device for destroying a hard disk, having a punch head attached to a piston rod, whereby a magnetic disk of the hard disk is punched out.

### DISCLOSURE OF THE INVENTION

### PROBLEMS TO BE SOLVED BY THE INVENTION

The device disclosed in the patent document is suitable for destroying a recording medium such as a hard disk that is large enough and has a magnetic disk (recording medium) whose position is readily determined.
However, a computer includes a number of recording media except a hard disk, and ICs also record important information therein. Thus, it takes more than destruction of a hard disk to completely avoid leakage of secret information, and ICs within a computer should be also destroyed.
However, ICs are small and mounted all over circuit boards arranged in a computer. Therefore, in disposal of a computer, it is necessary to remove circuit boards inside and destroy all ICs mounted on the boards one by one.
Herein, in order to destroy ICs using the device disclosed in the patent document described above, the punch head is to be brought down to the ICs on the boards, but the ICs are small and mounted all over the boards as described above, resulting in low workability. Further, an IC tip is irregularly attached depending on a board, rendering difficulty to produce a jig with general versatility.
Thus, in consideration of the reality described above, the invention aims to provide a recording medium destruction device adapted to readily destroying a recording medium that is small and irregularly mounted such as an IC mounted on a board.

### SUMMARY OF THE INVENTION

One of aspects of the invention as defined in claim 1 proposed to solve the problems and drawbacks described above is a recording medium destruction device, including a device mounting part for mounting thereon one selected from a recording medium and an electronic device incorporating a recording medium and a destruction part adapted to be shifted relative to the device mounting part between positions close to and remote from the device mounting part, and being adapted to destroy one selected from (a) the recording medium and (b) the recording medium incorporated in the electronic device by pressing the destruction part to the one selected from the recording medium and the electronic device with the selected one mounted on the device mounting part, wherein the destruction part comprises a plurality of projections of a needle or pin shape, the projections being arranged in a planar manner.
The recording medium destruction device of the present aspect includes the destruction part having a plurality of projections of a needle or pin shape arranged in a planar manner, the destruction part being shifted relative to the device mounting part between positions close to and remote from the device mounting part. Thereby, the projections evenly come into contact with a device such as an electronic device mounted on the device mounting part. Consequently, even if recording media are irregularly mounted as a circuit board taken out of a computer, the projections come into contact with all the recording media, thereby destroying all the media.
Further, the projections contacting with a device such as an electronic device each are of a needle or pin shape, so that a concentrative force is loaded on the device. Therefore, according to a configuration of the present aspect, relatively small power source is enough to drive the destruction part.
Another aspect of the invention as defined in claim 2 is the device as defined in claim 1, wherein the destruction part is divided into a plurality of sections, each section being adapted to be shifted relative to the device mounting part between positions close to and remote from the device mounting part.
The recording medium destruction device in the present aspect is suitable for destroying recording media such as ICs mounted on a circuit board having marked irregularities on its surface.
Specifically, a circuit board taken out of a computer includes one of a flat plate, but generally has a certain degree of irregularities. Thus, in the case that a convex portion is higher than a certain level or that a convex portion is constituted by a high-rigid member, upon contacting of a part of the destruction part with the corresponding portion, the destruction part may be stopped moving. That may cause the projections of the destruction part to stop short of the ICs situated at low positions.
The present aspect therefore divides the destruction part into a plurality of sections, each section being adapted to be shifted relative to the device mounting part between positions close to and remote from the device mounting part.
According to the device in the present aspect, even if some of the sections collide with a high rigid portion and stop moving, the other sections continues to move independently of that. Thus, the projections in the other sections reach the recording media such as the circuit board, thereby destroying the media.
Still another aspect of the invention as defined in claim 3 is the device as defined in claim 1 or 2, wherein the projections of the destruction part are arranged so that configuration of the projections is changeable.
Yet another aspect of the invention as defined in claim 4 is the device as defined in one of claims 1 to 3, wherein the destruction part further includes a base having a number of projection attaching parts, to at least part of which the projections are attached, wherein the projections of the destruction part are arranged so that configuration of the projections is changeable by changing the number or the positions of the projections attached to the base.
The recording medium destruction devices as defined in claims 3 and 4 each are designed to change a configuration of the projections of the destruction part. Therefore, in the case that a portion that a user wants to avoid destruction in a device such as an electronic device or a portion that is too rigid to destroy is known in advance, a configuration of the projections are changed to protect such a portion or prevent the destruction part from stopping moving.
Yet still another aspect of the invention as defined in claim 5 is the recording medium destruction device as defined in claim 3 or 4, wherein the device mounting part has a positioning jig for positioning the one selected from the recording medium and the electronic device.
The device in the present aspect has the positioning jig for positioning a device such as an electronic device on the device mounting part, so as to carry out positioning of a portion that a user wants to avoid destruction in a device or a portion that is too rigid to destroy in relation to the projections of the destruction part.
The positioning jig is preferably changeable.
Further aspect of the invention as defined in claim 6 is the recording medium destruction device as defined in one of claims 1 to 5, wherein the electronic device is a circuit board on which the recording medium is mounted.
Further aspect of the invention as defined in claim 7 is the recording medium destruction device as defined in one of claims 1 to 6, being adapted to destroy the recording medium incorporated in the electronic device, the electronic device further incorporating a display and being placed on the device mounting part, wherein the destruction part has the projections on a portion except an area where the display is positioned.
An electronic device such as a cell phone, for example, incorporates a display such as a liquid crystal, which is much in demand for recycling. Thus, even when a recording medium of a cell phone is destroyed including its body, it is desired to avoid damage to the display.
The present aspect responds to this demand and distributes the projections of the destruction part to a portion except an area where the display is positioned, so as to eliminate damage to the display.
Further aspect of the invention as defined in claim 8 is the recording medium destruction device as defined in one of claims 1 to 7, being adapted to apply voltage to the projections.
The device in the present aspect is designed to apply voltage to the projections. When the projections have a contact with a recording medium itself or a printed wiring communicating with the recording medium, current flows through the medium to short out and destroy the medium. According to the present aspect, a recording medium is destroyed with certainty.

Further aspect of the invention as defined in claim 9 is the recording medium destruction device as defined in one of claims 1 to 8, the projections being adapted to withdraw toward the destruction part upon reception of a predetermined amount of force.
The device in the present aspect is suitable for destroying media such as ICs mounted on a circuit board having marked irregularities of its surface.
According to the device in the present aspect, when the projections bump into an area such as a high-rigid portion and get unmovable further downward, the projections themselves withdraw toward the destruction part upon reception of reaction force from a circuit board. The other projections continue moving downward regardless of this movement, so as to reach a recording medium such as a circuit board to destroy the medium.
Further aspect of the invention as defined in claim 10 is the recording medium destruction device as defined in one of claims 1 to 9, further including a projection releasing member adapted to release the projections from the one selected from the recording medium and the electronic device incorporating a recording medium.
As the device in the present aspect has the projection releasing member for releasing the projections from a recording medium or an electric device incorporating a recording medium, the medium or the electronic device is readily taken out from the destruction part after the projections are thrust through them.
Further aspect of the invention as defined in claim 11 is the recording medium destruction device as defined in one of claims 1 to 10, wherein the projections are magnetized.
The projections employed in the present aspect are magnetized. The projections in the present aspect are useful for a recording medium that is magnetically recorded, and erase recorded data or make them unreadable.
There is more than one means to magnetize the projections. It includes a means to employ projections composed of permanent magnets, a means to temporarily magnetize the projections by forming electric magnets wiring a coil around projections, or a means to indirectly magnetize projections by forming the projections by a magnetic material such as iron or nickel and further magnetizing members having exposure to the projections.

### ADVANTAGEOUS EFFECT OF THE INVENTION

The recording medium destruction device in the present invention is effective in readily destroying a recording medium that is small and irregularly mounted. That is effective in preventing leakage of secret information of concern in disposal of a recording medium.

### DESCRIPTION OF THE PREFERRED EMBODIMENTS

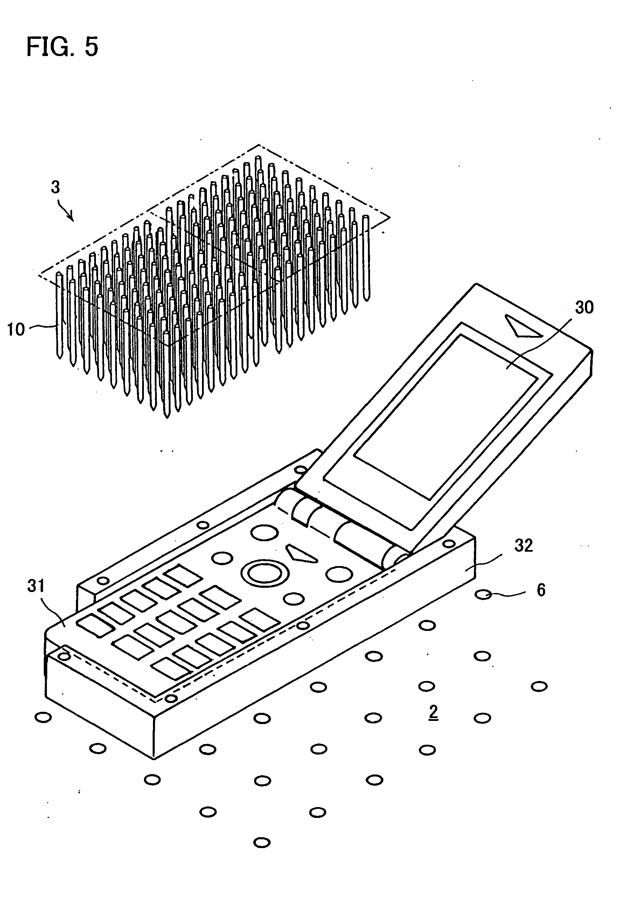

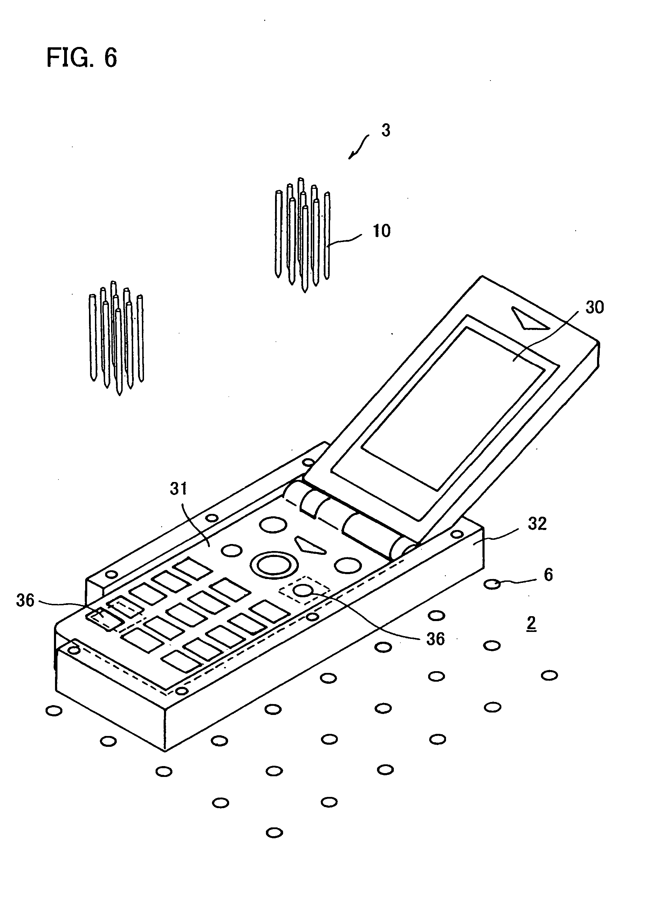

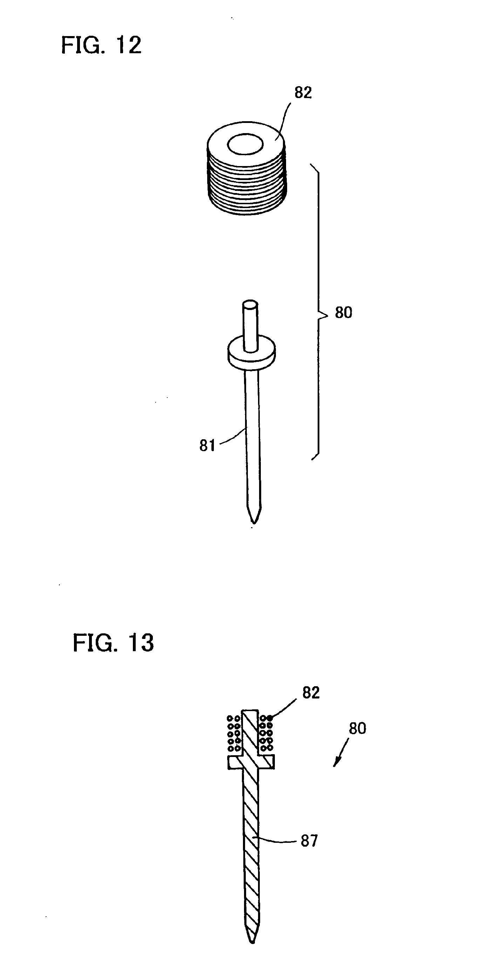

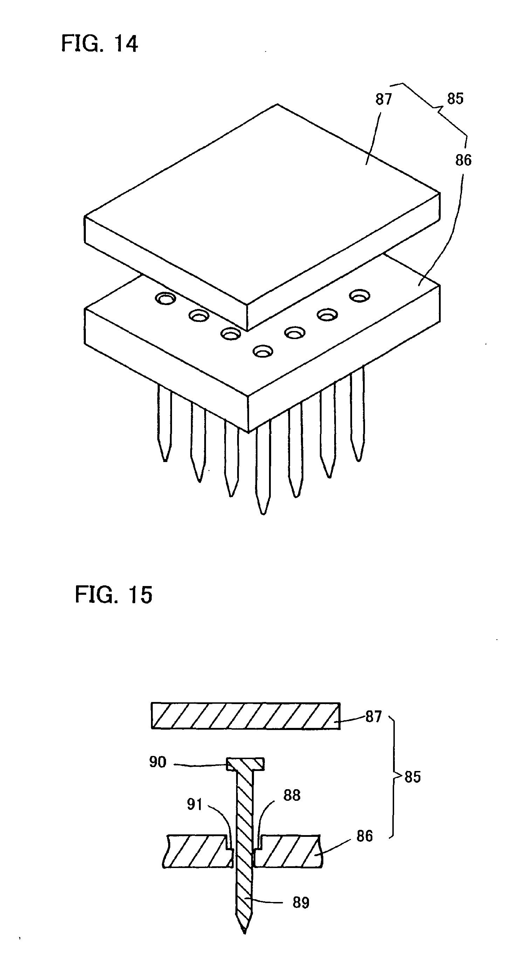

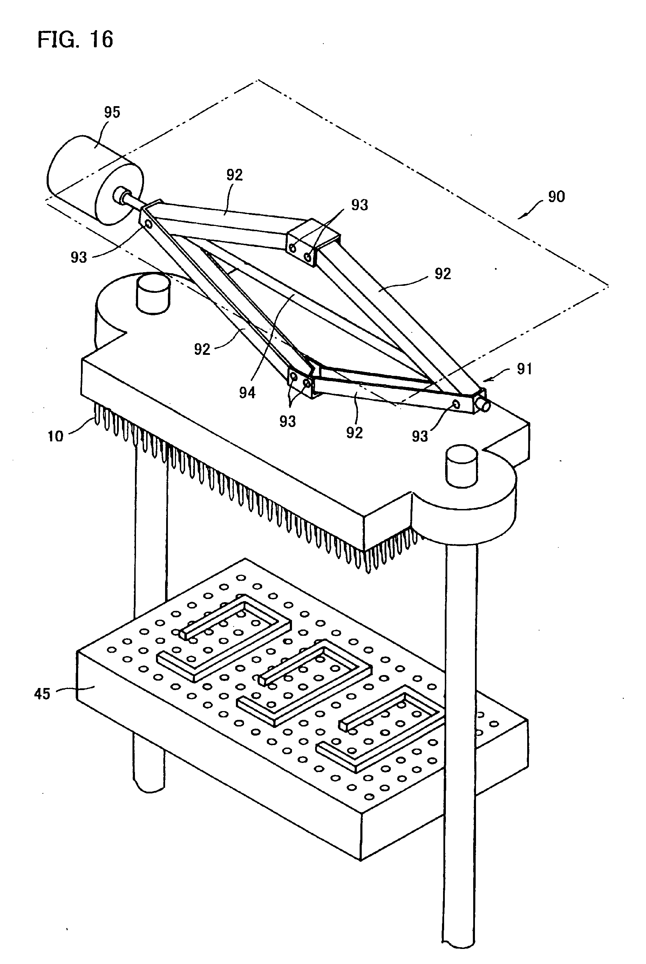

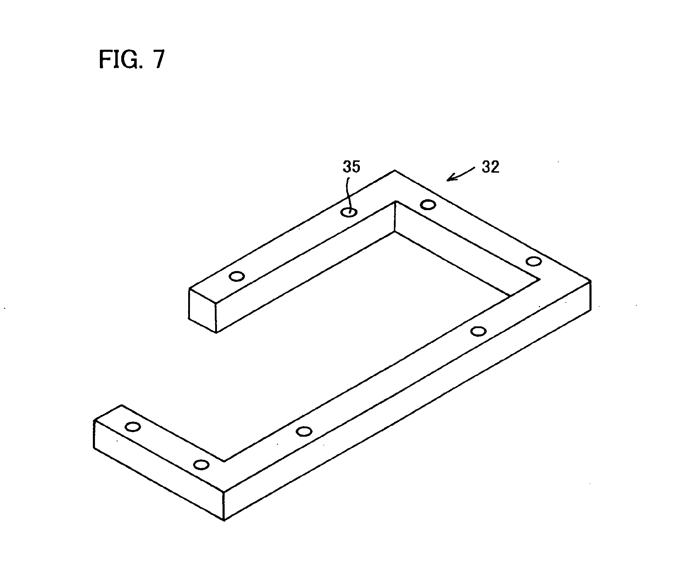

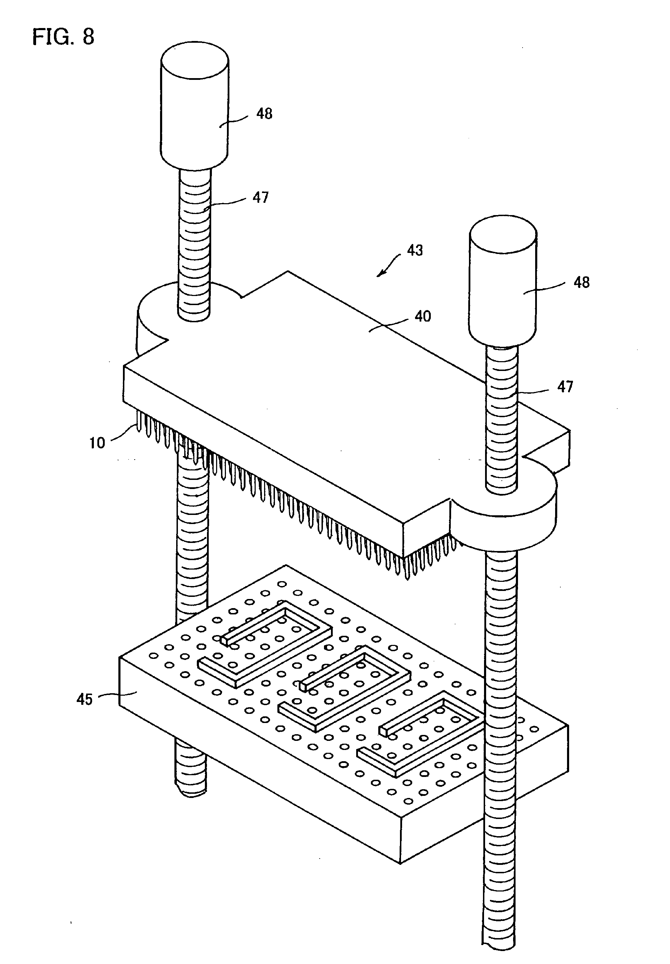

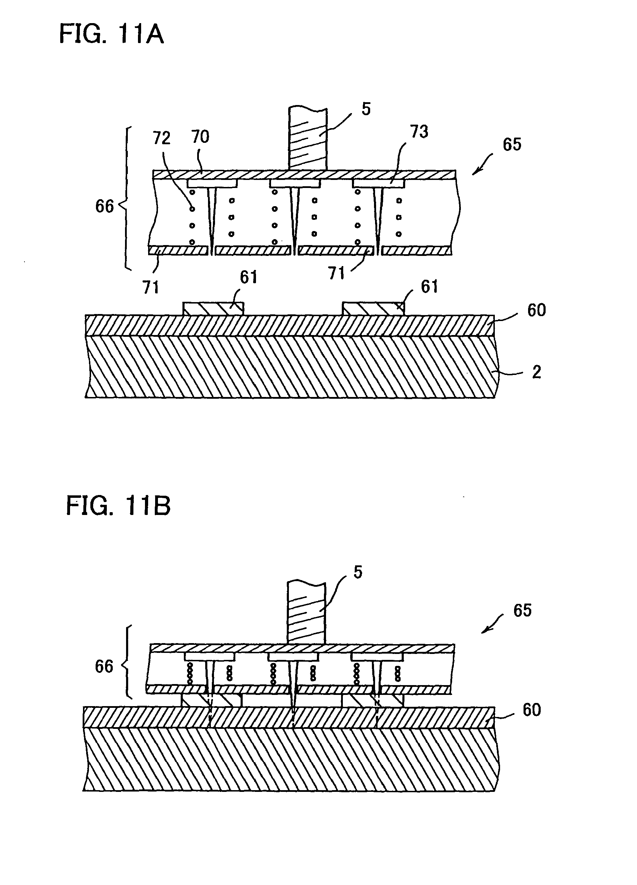

Now, a preferred embodiment of the present invention will be described below, making reference to the accompanying drawings.

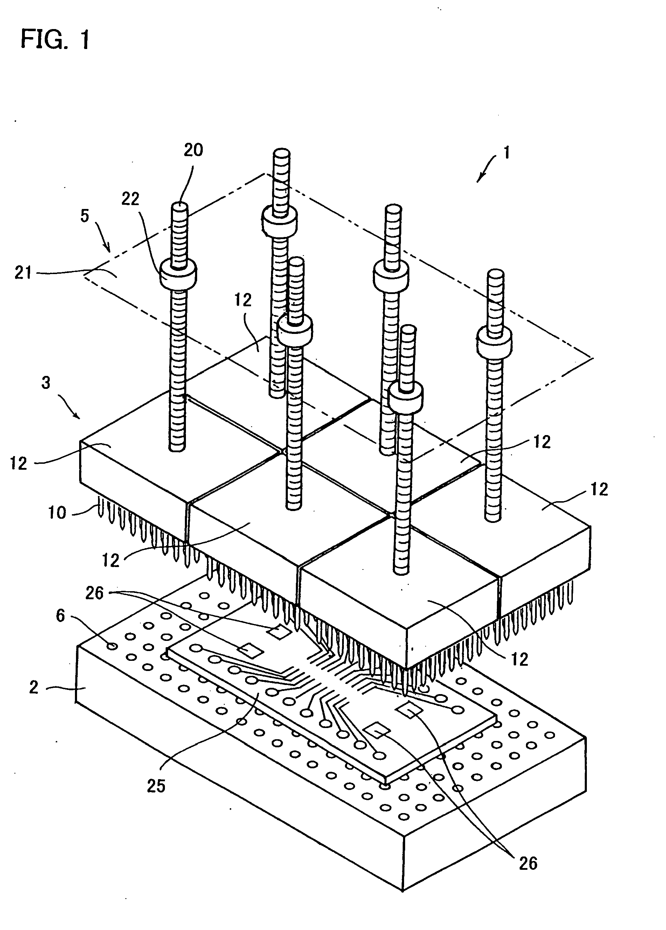

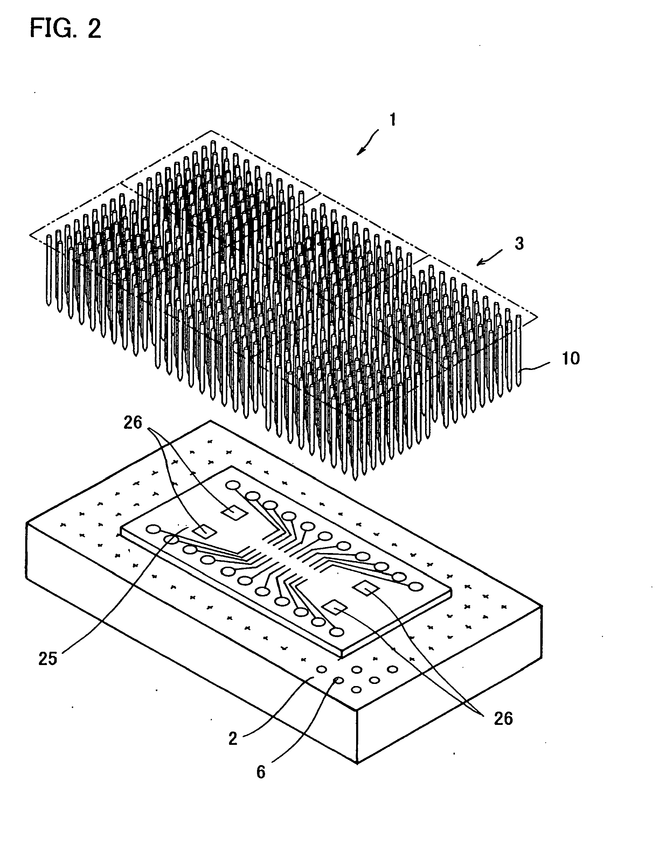

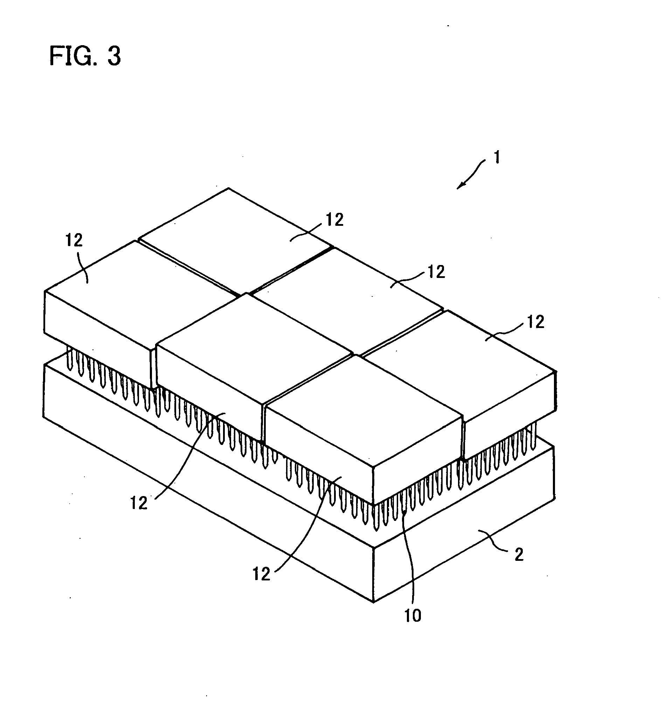

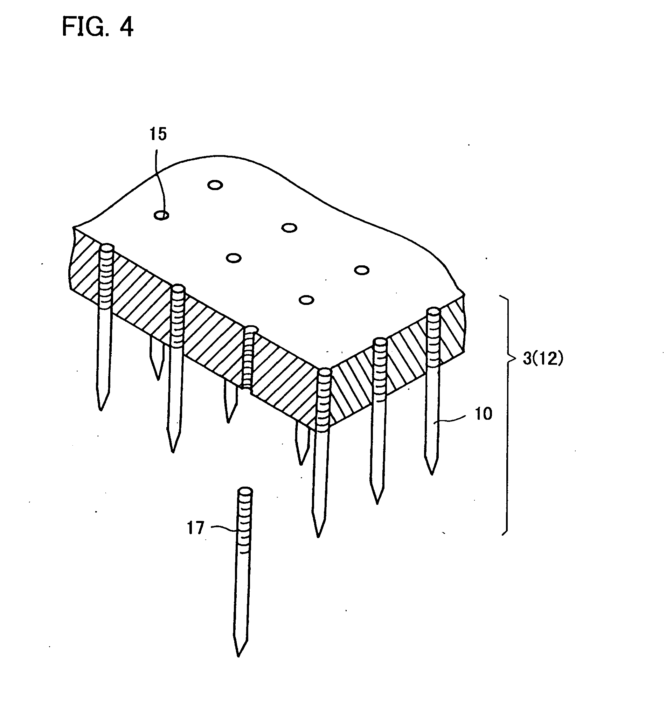

Fig. 1 is a perspective view showing a principal part of a recording medium destruction device in an embodiment of the present invention. Fig. 2 is a perspective view showing a relationship between needles and device mounting part in the recording medium destruction device in Fig. 1. Fig. 3 is a perspective view of the recording medium destruction device in destroying a circuit board using the device in Fig. 1. Fig. 4 is a partially sectional perspective view of a destruction part in the recording medium destruction device in Fig. 1.
In the drawings, the numeral 1 denotes a recording medium destruction device in an embodiment of the present invention. The device 1 in the present embodiment consists mainly of a device mounting part 2, a destruction part 3, and an elevating unit 5.
The device mounting part 2 is a metal plate having high rigidity and a surface plate shape. A plurality of threaded holes 6 are distributed vertically and horizontally in a planar manner on a top face of the device mounting part 2.
The destruction part 3 includes a number of needles 10 arranged vertically and horizontally in a planar manner and is divided into six sections.
The sections of the destruction part 3 each are of a quadrangular shape and have a plate-like base 12. Referring to Figs. 1 and 4, the needles 10 are arranged densely all over a bottom face of each base 12. More specifically, the base 12 has a number of screw holes (projection attaching part) 15 as shown in Fig. 4, the threaded holes 15 being distributed vertically and horizontally in a planar manner. Herein, the threaded holes 15 penetrate through the base 12.
An area density of distribution of the screw holes (projection attaching part) 15 of the destruction part 3 is 15 to 300 per 10 centimeters square, and preferably 20 to 100 per 10 centimeters square.
As described below, even in the case of attaching the needles 10 to the base 12 by means other than screws, the projection attaching part 15 is recommended to have a similar distribution density.
On the other hand, the needles 10 each are provided with a screw 17 at its rear end as shown in Fig. 4. The needles 10 each are attached by engaging the screw 17 at its rear end with the threaded hole 15 of the base 12. Thus, the needles 10 are attachable to and detachable from the base 12.
Thicknesses of the needles 10 depend on a recording medium to be destroyed, but each of the needles 10 has a diameter of one to ten millimeters in thickness and preferably of two to six millimeters.
As shown in Fig. 1, the elevating unit 5 moves up and down screw shafts 20. In the present embodiment, as shown in Fig. 1, female screw members 22 are rotatively attached to a frame 21 shown in chain double-dashed line. Each of the female screw members 22 forms in its center a female screw, into which one screw shaft 20 is inserted.
Further, the female screw members 22 is rotated by a motor not shown, and whereby the screw shafts 20 engaged with the female screw members 22 are moved up and down.
The bases 12 of the destruction part 3 are attached to heads of the screw shafts 20, respectively.
The present embodiment has six motors (not shown) for moving up and down the destruction part 3, with each of the bases 12 separately moved up and down by the respective motor. The motors automatically stop upon reception of electric current above a certain level.
Now, how to use the recording medium destruction device 1 in the present embodiment will be described.
In order to destroy recording media such as ICs mounted on a circuit board using the device 1 in the present invention, a circuit board 25 incorporating recording media such as ICs 26 to be destroyed is to be put on the device mounting part 2 as shown in Fig. 1.
Then, a power switch not shown is turned on to start up the motor, so as to move down the destruction part 3. As described above, though the bases 12 of the destruction part 3 are separately moved up and down, turning on of the switch starts moving down of the bases 12 all at once, with the result that the destruction part 3 is actually moved in an integrated fashion.
Then, the needles 10 of the destruction part 3 reach the surface of the circuit board 25, pressing the circuit board 25 and penetrating through the circuit board 25. Herein, as the needles 10 are arranged in a planar manner in the present embodiment, a number of throughholes are perforated in the circuit board 25. Further, as the needles 10 are densely arranged at short intervals among the needles 10, a number of throughholes per unit area are perforated in the circuit board 25. Consequently, the throughholes are densely formed in the circuit board 25. Therefore, at least one of the needles 10 is brought into contact with the corresponding IC 26 mounted on the circuit board 25, with the effect that any IC 26 is destroyed by at least one needle 10.
Specifically, though the ICs 26 each are irregularly mounted on part of the circuit board 25, the recording medium destruction device 1 in the present embodiment densely perforates the throughholes in all areas of the circuit board 25, so that at least one needle 10 comes into contact with any IC 26 on the circuit board 25, consequently destroying all the IC 26s. Especially, in the present embodiment, the needles 10 are pressed onto the circuit board 25, so that concentrative stress is applied to the ICs 26 mounted on the circuit board 25, thereby readily destroying the ICs 26.
If the destruction part were of a flat plate, force loaded on the circuit board 25 would be dispersed, resulting in applying only small compressive stress to the circuit board. However, according to the present embodiment, the circuit board 25 is pricked with needlepoints, so as to be readily destroyed.
Further, electronic devices such as IC 26 mounted on the circuit board 25 have uneven height, but in the present embodiment, the destruction part 3 is divided into a plurality of bases 12, which separately moving up and down respectively, ensuring destruction of almost all of the ICs 26.
Specifically, in the case of an IC 26 with high height on the circuit board 25, the needles 10 attached to the base 12 of the section corresponding to the IC 26 comes into contact with the IC 26. The base 12 moves further downward to penetrate through the IC 26, whereupon resistance against the needles 10 gradually increases to increase current value of the motor, so as to stop the motor, and thus, the base 12 of the corresponding section stops moving down.
Meanwhile, as being independent of the base 12 of the section stopped first, the bases 12 of the other sections continue to move down. The needles 10 of the bases 12 continuing to move downward reach the IC 26s with low height, thereby destroying the ICs 26 with low height.
According to the recording medium destruction device 1 in the present invention, almost all of the ICs 26 are destroyed even in the case of the circuit board 25 on which the high ICs 26 and the low ICs 26 are mixed. Further, since electronic devices other than ICs 26 are also destroyed, even if some sort of information is recorded in the electronic devices other than ICs 26, the information is not recovered from these devices.
Fig. 3 shows the recording medium destruction device 1 in destroying the circuit board 25 on which high electronic devices and low electronic devices are mixed.
In the case that the circuit board 25 includes a high member such as a slot because of its structure, the needles comes into contact with the member to stop moving down in the section corresponding to the member, but the bases 12 of the other sections continue to move further downward to reach the surface of the circuit board 25. As a consequence, the needles 10 of most of the sections reach the surface of the circuit board 25, thereby destroying almost all the recording media.
The description above illustrates destruction of a device such as the ICs 26 on the circuit board 25 using the device 1 in the present embodiment, but the device 1 in the present embodiment destroys not only a circuit board but also a recording medium including a hard disk, an IC card, an optical disk, or an MO.
Further, even in the case of a recording medium incorporated in an electronic device such as a cell phone or an electronic databook, the entire device is destroyed.
Fig. 5 is a perspective view showing a principal part of the recording medium destruction device in destroying a cell phone using the device in Fig.
1. Fig. 6 is a perspective view showing a principal part of a recording medium destruction device in another embodiment of the present invention in destroying a cell phone using the device. Fig. 7 is a perspective view of a positioning jig provided on the device mounting part in the recording medium destruction device.
   Herein, a device such as a cell phone incorporates a display made of such as a liquid crystal, which is strongly requested to be recycled. Therefore, in such a case, it is preferable to use the destruction device by detaching the needles 10 in the area corresponding to a display 30 as shown in Fig. 5.
   Specifically, though the needles 10 are arranged in a planar manner on the destruction part 3 in the device 1 in the present embodiment, the needles 10 can be optionally detached because being attached by the threaded holes 15 and the screws 17.
   Thus, if and when the needles 10 in the area corresponding to the display (liquid crystal) 30 are detached, the destruction part 3, which moves downward, does not scratch the display 30.
   Further, in such a case, it is preferable to make a positioning in mounting an electronic device 31 such as a cell phone on the device mounting part 2.
   In the present embodiment, a plurality of the threaded holes 6 are distributed in a planar manner on the top face of the device mounting part 2, so that the threaded holes 6 are used to attach a positioning jig 32.
   In the case of destroying a cell phone, for example, a positioning jig having shape of a frame that is in conformity with a cell phone in shape as shown in Fig. 7 is fixed to the device mounting part 2 by means of screws. In Fig. 7, a numeral 35 denotes a throughhole through which the screw is inserted.
   As to the destruction part 3, as shown in Fig. 5, the needles 10 in the area corresponding to the display 30 of a cell phone (electronic device 31) are detached.
   After adjustment in this way, the cell phone (electronic device 31) is mounted on the device mounting part 2, whereupon the destruction part 3 is moved downward.
   Thereafter, the needles 10 of the destruction part 3 penetrate through areas except the display 30 of the cell phone 31, so as to destroy a recording medium inside.
   Consequently, secret information such as an address list is destroyed and a recyclable liquid crystal is recovered without any damage.
   In the case of using the positioning jig 32 as described above and in the case that positions of recording media 36 in the device such as the cell phone 31 are known in advance, the recording media 36 are destroyed by a smaller number of the needles 10, as shown in Fig. 6.
   The above-mentioned embodiment discloses such a configuration that the destruction part 3 is divided into a plurality of sections, each section separately moving up and down. This configuration has an effect for destroying a recording medium on the circuit board 25 regardless of irregularities of the surface thereof and is recommended, but the present invention is not limited thereto, and may employ a recording medium destruction device 43 as shown in Fig. 8 having such a configuration that all the needles 10 are attached to one base 40.
   Fig. 8 is a perspective view showing a principal part of the recording medium destruction device 43 in still another embodiment of the present invention.
   The recording medium destruction device 43 shown in Fig. 8 includes the base 40 having substantially the same area as a device mounting part 45, the both ends of the base 40 being engaged with feed screws 47. The feed screws 47 each are rotated by a motor 48. Rotation of the motors 48 move up and down the base 40 in whole, and whereby the needles 10 destroy recording media or electronic devices mounted on the device mounting part 45.
   The two embodiments described above destroy recording media only by physical force, but destruction of recording media may be carried out more completely by addition of an electric power.

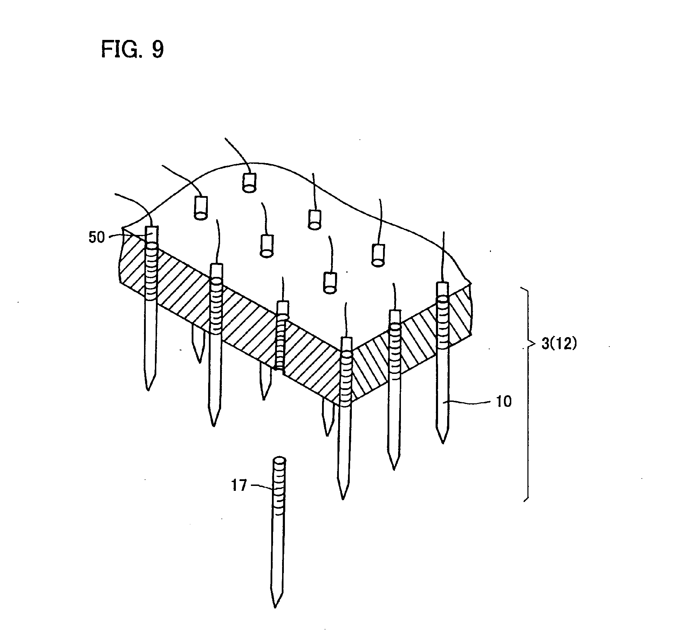

   Fig. 9 is a partially sectional perspective view of the destruction part to which an electrical power is added in the recording medium destruction device.
   As the embodiment shown in Fig. 9, for example, electrodes 50 are attached to the needles 10, so that high voltage is applied to the needles 10. High voltage current flows to recording media through needles 10 pricked in the recording media, thereby destroying the recording media.
   Further, it is recommended to destroy recording media by addition of a magnetic force instead of or in addition to application of high voltage.
   Permanent magnets can be employed as the needles 10, for example. Alternatively, a needle 80 shown in Figs. 12 and 13 can be employed, which is constituted in such a manner that a coil 82 is attached to a part of a needle body 81 made of a magnetic body and that the needle body 81 is electrically magnetized by applying current to the coil 82.
   According to the present embodiment, magnetism of the needles 10 disturbs a magnetic recording surface of a device such as a hard disk, thereby further magnetically destroying the device such as a hard disk.
   The above-mentioned embodiments each illustrate such a configuration that the needles 10 are integrally secured to the base 12 or 40, but it is possible to employ such a configuration that the needles are withdrawn towards the base 12 or 40.

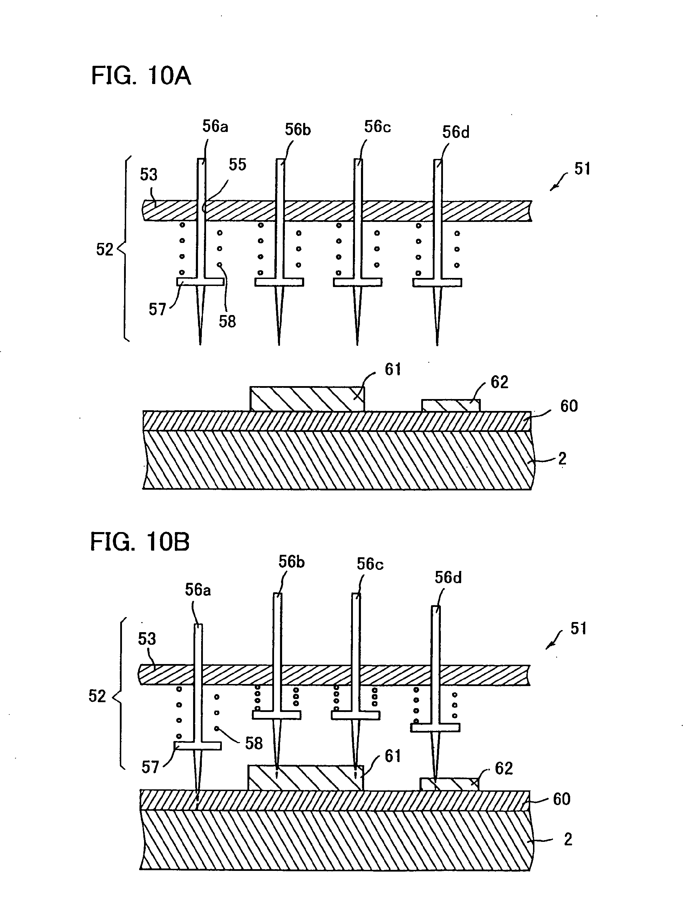

   Figs. 10A and 10B are sectional views of a recording medium destruction device employing such a configuration that needles are withdrawn toward a base in yet another embodiment of the present invention.
   A recording medium destruction device 51 shown in Figs. 10A and 10B has throughholes 55 in a base 53 of a destruction part 52, through which throughholes 55 needles 56 are inserted. The needles 56 each are movable in an axial direction through one throughhole 55 of the base 53, but do not drop off due to a stopper not shown provided on each of the needles 56.
   Further, the needles 56 each have a flange 57 adjacent to its head with an urging member 58 such as a spring between the flange and the bottom surface of the base 53. Thus, the needles 56 each are normally urged toward the device mounting part 2 by the urging member 58 such as a spring, but do not drop off from the base 53.
   When a circuit board 60 on the device mounting part 2 is destroyed by the device 51 shown in Figs. 10A and 10B, as well as the foregoing embodiments, the destruction part 52 is moved down. Then, on the assumption that an IC 61 with higher height and an IC 62 with lower height are mounted on the circuit board 60, the destruction part 52 is moved downward to firstly bring needles 56b and 56c into contact with the higher IC 61. As the needles 56b and 56c each are urged toward the device mounting part 2 by the urging member 58 such as a spring, heads of the needles 56b and 56c are embedded into the IC 61 by further moving down the destruction part 52, thereby perforating holes.
   However, reaction force against the needles 56b and 56c gradually increases. When the reaction force exceeds the urging force of the urging members 58, only the needles 56b and 56c stop as shown in Fig. 10B and other needles 56a and 56d move further downward with the base 53. Then, the needles 56d comes into contact with the lower IC 62, thereby destroying the IC 62.
   The needle 56a attached to a position corresponding to an area in which the ICs 61 and 62 are not situated moves downward up to the circuit board 60, then stops.
   Consequently, the present embodiment destroys almost all of the ICs 26.
   The present embodiment discloses such a configuration that the needles 56b and 56c are pressed by the urging members 58, so as to withdraw towards the destruction part 52 when the reaction force against the needles 56b and 56c exceeds the urging force of the urging members 58, but it is possible to employ such a configuration as providing with a stopper of some sort, so that the needles 56b and 56c withdraw toward the destruction part 52 when its reaction force becomes above a certain level.
   In each embodiment described above, the circuit board 25, 60 might move up along with the destruction part 3, 52 when the destruction part 3, 52 moves up if and when the needles 10, 56 are deeply pushed into the circuit board 25, 60.
   In order to respond to such a concern, it is recommended to provide with a mechanism for releasing a device such as a circuit board, as shown in Figs. 11A and 11B.
   Figs. 11A and 11B are sectional views of a recording medium destruction device employing a mechanism of releasing a device such as a circuit board in yet still another embodiment of the present invention.
   A recording medium destruction device 65 in the present embodiment has a two-tiered destruction part 66. Specifically, the destruction part 66 includes a main body-side base 70 attached to an elevation unit 5 and a movable base 71 closable to and remotable from the base 70. The base 70 and the base 71 are connected by means of urging members 72 such as springs and keep a regular interval under an unloaded condition.
   Needles 73 are attached to the base 70, whereas openings 75 are formed in the base 71. As shown in Fig. 11A, the needles 73 are situated between the base 70 and the base 71 under an unloaded condition.
   When a circuit board 60 on the device mounting part 2 is destroyed by the device 65 shown in Figs. 11A and 11B, as well as the foregoing embodiments, the destruction part 66 is moved down. As just described, as the needles 73 are situated between the base 70 and the base 71 under an unloaded condition, the destruction part 66 is moved downward to firstly bring the base 71 into contact with ICs 61 on the circuit board 60. The base 71 is not moved down further.
   Then, the destruction part 66 is further moved downward, whereupon the needles 73 are pushed by the base 70 to be moved downward, so as to be exposed from the openings 75 of the base 71. The destruction part 66 is still further moved downward, whereupon the needles 73 are further moved downward, so as to prick the ICs 61 on the circuit board 60 and finally penetrate therethrough.
   When the destruction part 66 is moved upward after destruction of the ICs 61, the needles 73 are moved upward. Herein, in the foregoing embodiments, there is a concern that the circuit board 60 might be moved upward along with moving up of the needles 73. However, in the present embodiment, the destruction part 66 has a two-tiered structure, in which the base 71 contacting with the ICs 61 on the circuit board 60 are urged in a direction away from the base 70 by means of the urging members 72, so that the base 71 pushes the circuit board 60 downward upon moving up of the destruction part 66. Thereby, the circuit board 60 is released from the needles 73 and stays on the device mounting part 2 when the destruction part 66 is move up.
   The device 65 in the present embodiment therefore has high workability.
   The embodiments described above illustrate the needles as the projections attached to the destruction part 3, 52, 66, but sort of thicker pins may be used as the projections.
   Further, the embodiments described above illustrate the screws as an attachment feature of the needles (projections) 10, but the present invention is not limited thereto.
   Such features as shown in Figs. 14 and 15 are thought instead of the attaching feature by means of the screws, for example. Fig. 14 is a perspective view of a destruction part of a recording medium destruction device in further embodiment of the present invention. Fig. 15 is a sectional view showing a part of the destruction part in Fig. 14.
   A destruction part 85 shown in Fig. 14 consists mainly of a base body 86 and a backboard 87. The base body 86 has holes 88 as shown in Fig. 15.
   The holes 88 each are a stepped hole, whose inner diameter is partly different. Specifically, the holes 88 each has a large diameter adjacent to the rear surface (top surface viewed edge-on) of the base body 86 and a small diameter adjacent to a needlepoint. A step 91 is formed in the middle of the hole 88, functioning as a stopper.
   The backboard 87 is of a flat plate.
   Needles 89 each are of a nail shape with a flanged engaging part 90 at its rear end.
   In the destruction part 85 shown in Fig. 14, the needles 89 are inserted through the holes 88 of the base body 86 with the tips (peaked portions) projecting downward from the holes 88. The backboard 87 is positioned at the rear surface of the base body 86, so that the engaging parts 90 of the needles 89 are sandwiched between the steps 91 formed in the holes 88 of the base body and the backboard 87. Specifically, the needles 89 are attached to the destruction part 85 in such a manner as sandwiching the engaging parts 90 between the steps 91 formed in the holes 88 and the backboard 87.
   Still further, the embodiments described above each have such a structure that configurations of the projections are changeable by putting in and taking out the needles, but it is recommended to change a configuration of the needles by providing with a plurality of a plate-like projection attaching members and replacing the projection attaching members, for example.
   Specifically, the projections are attached to each of the projection attaching members by a permanent bonding means such as welding or an attaching means such as hammering-in so as to be hardly taken out and further put in. The projection attaching members have different configurations of the projections. It is possible to prepare projection attaching members having projections made of various materials or of various thicknesses.
   In the present embodiment, the most appropriate projection attaching member depending on recording media or electronic devices to be destroyed is selected and attached to a destruction part by a fixing means such as screws so as to be detachable. The projections attached to the projection attaching member destroy devices such as recording media.
   The projection attaching member can be changed depending on recording media or electronic devices to be destroyed.
   In the embodiments described above, the elevating unit 5 utilizes thrust force of screws, but a linked mechanism may be utilized. Fig. 16 is a recording medium destruction device incorporating another type of elevating unit in which the linked mechanism is put into practice. In a recording medium destruction device 90 shown in Fig. 16, an elevating unit 91 is based on a quadric crank chain mechanism, wherein four members 92 having the same length each are rotatively connected by means of pins 93 and a screw shaft 94 is arranged through a portion corresponding to a diagonal line. The screw shaft 94 is engaged with the member 92 by means of female screws not shown. The screw shaft 94 is rotated by a motor 95.
   The elevating unit 91 has a mechanism similar to the known mechanical jack, wherein rotation of the rotational shaft 94 by the motor 95 elongates and contracts overall height to move up and down a base 40.
   A configuration other than the elevating unit 91 in the device 90 is the same as those of the foregoing embodiments.
   As described above, the recording medium destruction device in the present invention completely destroys a recording medium and prevents leakage of secret in disposal of an electronic device such as a computer.

### BRIEF DESCRIPTION OF THE DRAWINGS

Fig. 1 is a perspective view showing a principal part of a recording medium destruction device in an embodiment of the present invention;
Fig. 2 is a perspective view showing a relationship between needles and device mounting part in the recording medium destruction device in Fig. 1;
Fig. 3 is a perspective view of the recording medium destruction device in destroying a circuit board using the device in Fig. 1;
Fig. 4 is a partially sectional perspective view of a destruction part in the recording medium destruction device in Fig. 1;
Fig. 5 is a perspective view showing a principal part of the recording medium destruction device in destroying a cell phone using the device in Fig. 1;
Fig. 6 is a perspective view showing a principal part of a recording medium destruction device in another embodiment of the present invention in destroying a cell phone using the device;
Fig. 7 is a perspective view of a positioning jig provided on the device mounting part in the recording medium destruction device;
Fig. 8 is a perspective view showing a principal part of a recording medium destruction device in still another embodiment of the present invention;
Fig. 9 is a partially sectional perspective view of the destruction part to which an electrical power is added in the recording medium destruction device;
Figs. 10A and 10B are sectional views of a recording medium destruction device employing such a configuration that needles are withdrawn toward a base in yet another embodiment of the present invention, Fig. 10A being the view in preparation, Fig. 10B being the view after destruction;
Figs. 11A and 11B are sectional views of a recording medium destruction device employing a mechanism of releasing a device such as a circuit board in yet still another embodiment of the present invention, Fig. 11A being the view in preparation, Fig. 11B being the view after destruction;
Fig. 12 is an exploded perspective view of a needle employed in a recording medium destruction device in further embodiment of the present invention;
Fig. 13 is a sectional view of the needle employed in the recording medium destruction device in the embodiment shown in Fig. 12;
Fig. 14 is a perspective view of a destruction part of a recording medium destruction device in further embodiment of the present invention;
Fig. 15 is a sectional view showing a part of the destruction part in Fig. 14; and
Fig. 16 is a perspective view showing a principal part of a recording medium destruction device provided with a different type of elevating unit in the embodiment of the present invention.

## Claims

1. A recording medium destruction device, comprising:
a device mounting part for mounting thereon one selected from a recording medium and an electronic device incorporating a recording medium; and
a destruction part adapted to be shifted relative to the device mounting part between positions close to and remote from the device mounting part, and
being adapted to destroy one selected from (a) the recording medium and (b) the recording medium incorporated in the electronic device by pressing the destruction part to the one selected from the recording medium and the electronic device with the selected one mounted on the device mounting part,
wherein the destruction part comprises a plurality of projections of a needle or pin shape, the projections being arranged in a planar manner.

2. The device as defined in claim 1,
wherein the destruction part is divided into a plurality of sections, each section being adapted to be shifted relative to the device mounting part between positions close to and remote from the device mounting part.

3. The device as defined in claim 1 or 2,
wherein the projections of the destruction part are arranged so that configuration of the projections is changeable.

4. The device as defined in one of claims 1 to 3,
wherein the destruction part further comprises a base having a number of projection attaching parts, to at least part of which the projections are attached,
wherein the projections of the destruction part are arranged so that configuration of the projections is changeable by changing the number or the positions of the projections attached to the base.

5. The device as defined in claim 3 or 4,
wherein the device mounting part has a positioning jig for positioning the one selected from the recording medium and the electronic device.

6. The device as defined in one of claims 1 to 5,
wherein the electronic device is a circuit board on which the recording medium is mounted.

7. The device as defined in one of claims 1 to 6,
being adapted to destroy the recording medium incorporated in the electronic device, the electronic device further incorporating a display and being placed on the device mounting part,
wherein the destruction part has the projections on a portion except an area where the display is positioned.

8. The device as defined in one of claims 1 to 7,
being adapted to apply voltage to the projections.

9. The device as defined in one of claims 1 to 8,
the projections being adapted to withdraw toward the destruction part upon reception of a predetermined amount of force.

10. The device as defined in one of claims 1 to 9, further comprising:
a projection releasing member adapted to release the projections from the one selected from the recording medium and the electronic device incorporating a recording medium.

11. The device as defined in one of claims 1 to 10,
wherein the projections are magnetized.
